# EUROPEAN PATENT APPLICATION

(11) **EP 2 196 414 A1**
(43) Date of publication of application: **16.06.2010**
(21) Application number: 09177179.0
(22) Date of filing: 26.11.2009
(51) Int. Cl.: B65G 17/08, B65G 17/40

(54) **Conveyor**

(30) Priority: 11.12.2008 IT MI20082191
(71) Applicant: System Plast S.r.l., 24060 Telgate (BG) (IT)
(72) Inventor: MARSETTI, Sergio, 24060, CASTELLI CALEPIO (BG) - IT (IT)
(74) Representative: Kratter, Carlo

(57) **Abstract**

A conveyor, preferably a belt conveyor, comprising:
- a plurality of modules (1) disposed one following the other,
- each of said modules comprising a frontal portion and a rear portion (2, 3), comprising a plurality of ends (4) for connecting the modules together, two parallel lateral walls (17), a load-carrying upper surface (15A) and a lower surface (15),
- the ends (4) of one module intersecting at least partially with the end of the preceding and successive modules,
- said module ends (4) including coaxially aligned apertures (5) adapted to receive a transverse pin (6) to removably connect said modules together,
- said pin (6) comprising a cylindrically shaped first portion (7) extending into said apertures (5),
- said pin (6) and said modules comprising means and counter-means (8, 9, 10, 11A, 11 B) to removably prevent axial and rotational movements of said pin (6) when inserted through said apertures to connect two of said modules together,

in which said pin (6) comprises end portions (30, 31) projecting from said lateral walls (17) of the conveyor module (1) and adapted to cooperate in guiding said conveyor along a predetermined path.

## Description

The present invention relates to a conveyor, preferably a belt conveyor, in accordance with the pre-characterising part of the main claim.

Conveyors of the aforeindicated type have been known for some time, see for example those described in US 6,662,938 or EP 0 911 279.

If a known conveyor is required to follow a determined path it usually cooperates with sidepieces along which the lateral walls of the conveyor slide. In some cases, if the conveyor must be prevented from lifting during its load-carrying path and/or separating from the return guide during its return path, the conveyor modules comprise, projecting from its lower surface, L-shaped elements adapted to cooperate with suitably shaped cavities provided in the element along which the conveyor slides.

An object of the present invention is to provide a conveyor which enables the same modules to be used both when the conveyor under construction does not need to be guided along a predefined path and when, in contrast, the conveyor has to be guided along a predefined path and/or has to be guided and supported along its return path by a guide and support structure.

A further object is to provide a conveyor which can be driven along non-horizontal paths comprising for example, after a first horizontal conveying path, a second vertical path followed by a return path.

A further object is to provide a conveyor in which the conveyor load-carrying surface, on which the articles to be conveyed rest, is prevented from making contact with guide or support elements, in order to reduce the wear of said surface.

These and other objects which will be apparent to an expert of the art are attained by a conveyor in accordance with the characterising part of the main claim.

The present invention will be more apparent from the accompanying drawings, which are provided by way of non-limiting example and in which:
Figure 1 is a schematic perspective view of a portion of a conveyor according to the invention, seen from below;
Figure 2 is a schematic perspective view of a module of the conveyor, seen from below;
Figure 3 is a schematic perspective view of a connection pin for the conveyor;
Figure 4 is a schematic perspective view of two connected-together conveyor modules, seen from above;
Figures 5A and B are a schematic perspective view of a module with the connection pin shown in two different positions of use;
Figures 6 and 7 show, respectively, a front view and, seen from above, a perspective view of the conveyor module and of a portion of a conveyor guide and support element;
Figure 8 shows an enlargement of a portion of Figure 6.

With reference to said drawings, a conveyor according to the invention comprises a multiplicity of identical modules 1A, 1 B disposed in line one following the other and extending transversely to a desired direction of movement T of said conveyor. The module 1 comprises a frontal portion 2 and a rear portion 3, two lateral walls 17 and an upper surface 15A and lower surface 15. Each module comprises a plurality of ends 4 projecting from the frontal portion 2 and rear portion 3, the ends of the frontal portion of a first module 1A intersecting with the ends of the rear portion 3 of an adjacent module 1 B. These module ends 4 include first coaxially aligned apertures 5 adapted to receive a transverse pin 6 to removably connect said modules 1A, 1 B together.

This pin 6 comprises a cylindrically shaped first portion 7 extending into said aperture 6, a second portion 8 extending radially from an end 7A of said first portion 7, and two end portions 30 and 31 which project from the module lateral walls 17 when the pin is inserted into the module, to cooperate in guiding said conveyor along a predetermined path.

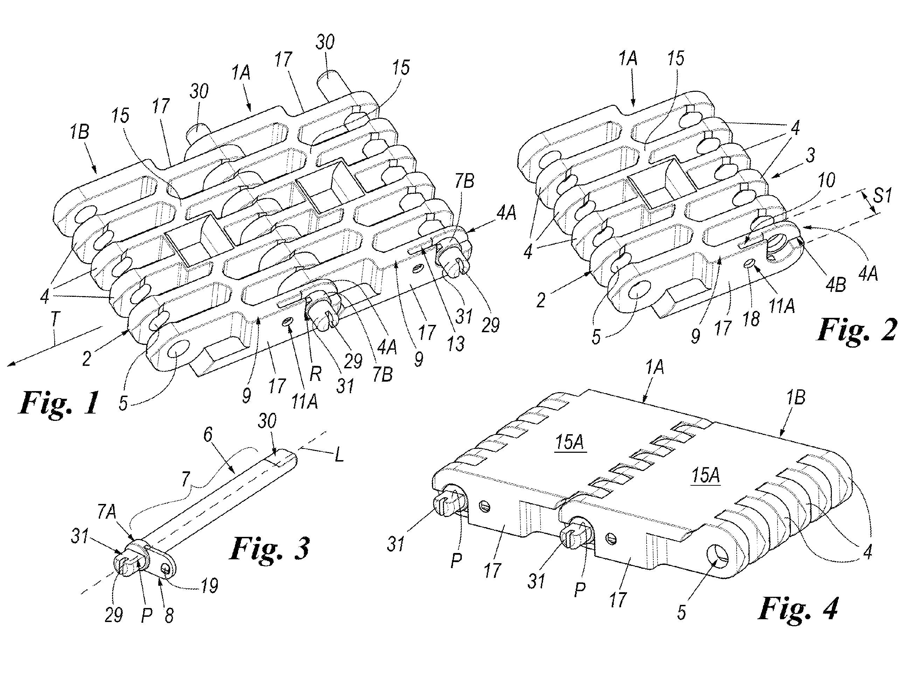

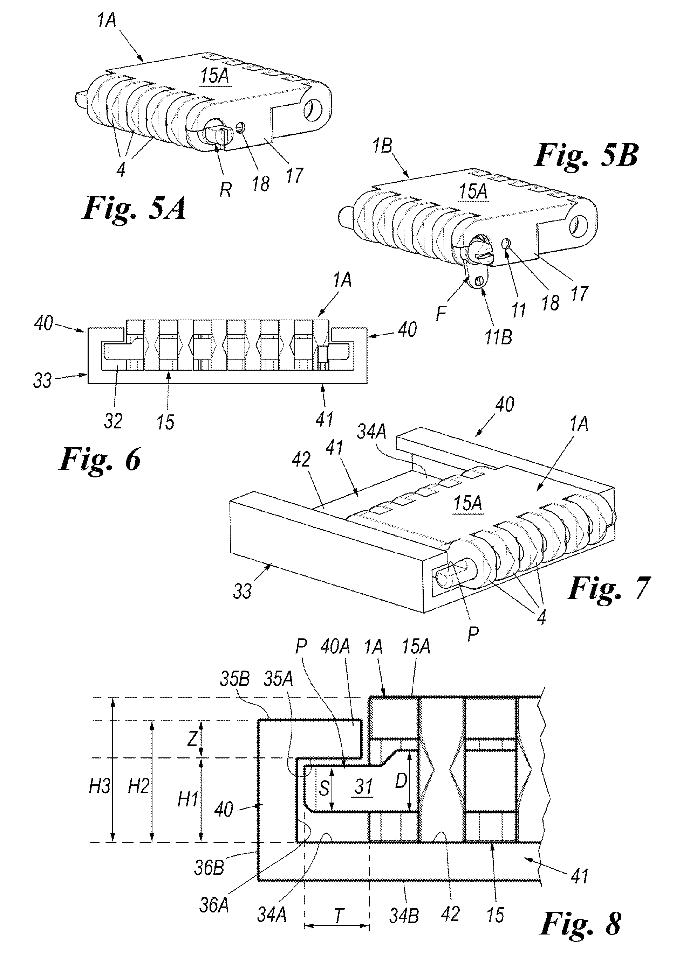

The pin 6 is rotatable about the longitudinal axis L of its first portion 7, between a first position F (shown in Figure 5B) in which axial movement of said pin is not prevented, and a second position R (Figure 5A and Figure 1) in which axial movement of said pin is prevented. A lateral portion 9 of each module comprises a seat 10 (Figure 2) presenting a window or passage 13 to house, and to prevent axial movement of, the second portion 8 of the pin 6 when the pin is rotated into the second position R. The seat 10 and the pin 6 comprise means 11A, B to removably prevent dislocation of the second portion 8 of the pin 6 from its second position R and in particular to prevent pin rotation.

This seat 10 is advantageously formed by reducing the lower part 4B (Figure 2), and in particular the thickness S, of that connection end 4A closest to the module lateral wall 17.

The means 11A, B for removably preventing dislocation of the second portion 8 of the pin 6 when this is rotated into its second position R comprise: a through hole 18 (Figure 2), provided in the lateral wall 17A where the seat 10 is provided, and a projecting element 19 provided on the second pin portion 8 to form a snap connection with said through hole 18.

Preferably the first part 7 of the pin 6 is shaped and dimensioned in usual manner, however at its end 7A it comprises a cylindrical head 7B (Figure 1) coaxial to this first part and having a larger diameter than said first part 7 and than the apertures 5. Preferably the second pin portion 8 extends from said head 7B. The pin 6 and the module body are dimensioned such that when the pin connects two modules together, the pin head 7B abuts against the outer wall of the first connection end 4A (Figure 1) such that the projecting portion 8 is coplanar with the seat 10 and can hence be rotated into and out of said seat without further adjusting the pin position.

According to the invention, at its ends the pin 6 presents portions 30 and 31 such that when the pin connects two modules 1A and 1 B together and is locked in its position R, so as to be prevented from undergoing axial or rotational movements, said end portions 30 and 31 project from the module lateral walls 17 by a distance T (Figure 6) of between 2 mm and 2 cm. Advantageously, these end portions 30 and 31 also present a recessed step forming an upper flat surface P, such that the thickness S (Figure 8) of these end portions is less than the diameter D of the first part 7 of the pin 6 (Figure 3) which engages in the module holes 5. Moreover this flat surface P of the end portions 30, 31 is provided in a position such that when the pin is in the position R in which its axial and rotational movements are blocked, it lies substantially parallel to the upper surface 15A of the modules.

According to the invention, the end portions 30 and 31 are adapted to copenetrate a seat 32 (Figure 6) of a guide element 33 extending immediately along the lateral walls 17 of the conveyor modules and below the module, to guide it and support it along a predefined path. Advantageously, the guided element 33 is of elongated shape and laterally presents two parts 40 of C cross-section connected together by a flat part 41. The C-shaped parts 40, the seat 32 of which houses the projecting parts 30, 31 of the pin 6, present: an internal lower surface 34A and an external lower surface 34B, an internal upper surface 35A and an external upper surface 35B, all mutually parallel and perpendicular to an internal lateral surface 36A and an external lateral surface 36B. The flat part 41 of the guide and support element 33 presents a flat upper surface 42 along which the module upper part 15 slides during the conveyor load-carrying path.

Advantageously the C-shaped parts 40 and the flat part 41 are formed in one piece such that the flat surface 42 of the part 41 is coplanar with the internal flat surfaces 34 of the C-shaped parts (as shown in Figures 8 and 7). The C-shaped parts 40 and flat part 41 could however also be separate from each other and be fixed to usual support elements, but taking care that at least along the conveyor load-carrying path the flat surfaces 34A and 42 remain mutually coplanar.

According to the invention, as the end guide portions 30 and 31 of the pin 6 present a step determining a reduced thickness S relative to the pin diameter D, and an upwardly facing flat surface P during the conveyor load-carrying path, the seat 32 of the C-shaped guides 40 for said end portions 30 and 31 can have a height H1 (from the lower surfaces 34 and 42 on which the conveyor slides during its load-carrying path) which is reduced, and consequently the overall height H2 (again from said surfaces 34A and 42) of the C-shaped guide 40 can be reduced to a value which is less (by at least a few millimetres, preferably at least 2 millimetres) than the conveyor height H3 (this latter height also being measured from said surface 42 on which the conveyor rests during its load-carrying path). In this manner many advantages are obtained:
- the conveyor upper surface 15A, even if worn, is never at the same height as the upper surface 35B of the C-shaped parts 40, this always ensuring optimal dragging of conveyed articles even if they project from the conveyor,
- the thickness Z of the upper arm 40A (Figure 8) of the C-shaped parts 40 can be increased with evident advantages for the strength of this component.

It should be noted that these advantages are achieved because the flat surfaces P of the end parts 31 and 39 of the pin when this is correctly blocked always face upwards parallel to the flat surface 15A of the conveyor module.

According to the invention, during the conveyor load-carrying path, i.e. when transporting the articles to be conveyed, the lower surface 15 of the conveyor modules slides on the flat upper surface 42 of the guide and support element 33, in which condition the pin end parts 31 and 30 are housed in the seat 32 of the C-shaped part 40 of said guide and support element, the conveyor being guided in this manner along the same path followed by the C-shaped guide element. In particular, if the conveyor is required to follow a path inclined to a first horizontal plane, the C-shaped guides merely need to also have the desired inclination in order for the conveyor to also follow this inclined path by virtue of the ends 31 and 30 being engaged in the C-shaped guides. Likewise along the conveyor return path it is supported simply by the ends 31 and 30 resting in the C-shaped guides without the need for the conveyor load-carrying surface 15A to also come into contact with support elements. This reduces the wear of this load-carrying surface.

That pin end portion 31 closer to the other part 8 of the pin 6 advantageously comprises in its outer face a slot 29 into which the head of a tool (not shown) can be inserted to rotate the pin into its two different positions F and R.

According to the invention, when two modules have been connected together by the pin 6, the head of a tool is inserted into the pin head slot 29 and the pin rotated until that portion 8 passing through the passage 13 is housed in the seat 10 and the projecting element 19 snap-connects into the hole 18 provided in the lateral wall of the module. It should be noted that in this snap-connection it is the second portion 8 of the pin 6 which slightly deforms elastically towards the interior (i.e. towards the module centre) when the bevelled portion 24 of the projecting element 19 contacts the edge of the seat 10. When the pin 6 is to be removed, its head 6B has to be rotated using a tool head inserted into the slot 29 in the pin head. In this manner the projecting element of the second pin portion disengages from the hole 18.

It should also be noted that the seat 10 for the second portion 8 of the pin 6 can be provided at the end of the plurality of either the front or rear connection ends 4 and that those figures showing this seat provided in a left hand portion of the rear connection ends must be interpreted as a non-limiting example of the invention.

Finally it should be noted that the aforedescribed embodiment has been provided by way of non-limiting example only, and that numerous variants are possible all falling within the same inventive concept, hence for example the described means and counter-means for blocking the axial and rotational movements of the pin could be of a different type known to the expert of the art, for example of the type known in the previously cited known art.

## Claims

1. A conveyor, preferably a belt conveyor, comprising:
- a plurality of modules (1) disposed one following the other,
- each of said modules comprising a frontal portion and a rear portion (2, 3), comprising a plurality of ends (4) for connecting the modules together, two parallel lateral walls (17), a load-carrying upper surface (15A) and a lower surface (15),
- the ends (4) of one module intersecting at least partially with the ends of the preceding and successive modules,
- said module ends (4) including coaxially aligned apertures (5) adapted to receive a transverse pin (6) to removably connect said modules together,
- said pin (6) comprising a cylindrically shaped first portion (7) extending into said apertures (5),
- said pin (6) and said modules comprising means and counter-means (8, 9, 10, 11A, 11 B) to removably prevent axial and rotational movements of said pin (6) when inserted through said apertures to connect two of said modules together,
**characterised in that:**
- said pin (6) comprises end portions (30, 31) projecting from said lateral walls (17) of the conveyor module (1) and adapted to cooperate in guiding said conveyor along a predetermined path.

2. A conveyor as claimed in claim 1, **characterised in that** the end portions (30, 31) present a recessed step forming in said portions a substantially flat upper surface (P), such that the thickness (S) of said end portions is less than the diameter (D) of the first pin part (7) inserted through the coaxial apertures (5) of the modules (1 A, 1 B).

3. A conveyor as claimed in claim 2, **characterised in that** when the means and counter-means (8, 9, 10, 11A, 11 B) prevent axial and rotational movements of the pin (6) inserted through the apertures (5), the flat surface (P) of the end portions (30, 31) is in a position substantially parallel to the module load-carrying surface (15A) and closer to said surface.

4. A conveyor as claimed in claim 1, **characterised in that** the end portions (30, 31) are adapted to penetrate a seat (32) of a guide element (33) extending immediately along the lateral walls (17) and below the lower surface (15) of at least some of the conveyor modules, said element (33) guiding the conveyor and supporting it along the predefined path.

5. A conveyor as claimed in claim 4, **characterised in that** the guide element (33) has an elongated shape and laterally presents two parts (40) of C cross-section connected together by a flat part (41), said C-shaped parts (40) presenting a seat (32) to house the projecting parts (30, 31) of the pins (6).

6. A conveyor as claimed in claim 5, **characterised in that** the C-shaped parts (40) present: an internal lower surface (34A) and an external lower surface (34B), an internal upper surface (35A) and an external upper surface (35B), all mutually parallel and perpendicular to an internal lateral surface (36A) and an external lateral surface (36B), the flat parts (41) of the guide and support element (33) presenting a flat upper surface (42) along which the lower surface (15) of at least some of the modules slides along the conveyor load-carrying path, the C-shaped parts (40) and the flat parts (41) being formed such that for at least some of said C-shaped parts (40) and flat parts (41) the flat surface (42) of the flat parts (41) is coplanar with the internal flat surfaces (34A) of the C-shaped parts (40).

7. A conveyor as claimed in claim 1, **characterised in that** the overall height (H2) of the guide element (33) for the end portions (30, 31), measured from the inner lower surface (34A) of the seat (32) for said ends coplanar with a conveyor slide surface (42) is less, by a few millimetres, than the height (H3) of the conveyor measured from said slide surface (42), in order to be sure that the upper load-carrying surface (15A), even if worn, is at a height greater than the outer upper surface (35B) of the guide element (33).

8. A conveyor as claimed in claim 4, **characterised by** being supported in at least one portion of its return path only by virtue of the ends (31, 30) of the pins (6) being supported and sliding in the guide elements (33) provided in said pins, without the conveyor load-carrying surface (15A) coming into contact with further support elements and without wear of said load-carrying surface.

9. A conveyor as claimed in claim 1, wherein the pin (6) comprises a second portion (8) extending radially from one end of the first portion (7) of the pin, said pin being rotatable about a longitudinal axis (L) of said pin first portion (7) between a first position (F) in which axial movement of said pin (6) within the module apertures (5) is not prevented and a second position (R) in which said axial movement and further rotations of the pin are prevented, a lateral portion (9) of each of said modules (1) comprising a seat (10) for housing, and for preventing axial and rotational movement of, said second portion (8) of the pins (6) when a pin is rotated into said second position (R), said seat (10) comprising a passage (13) for inserting into said seat at least a part of said second portion (8) of the pin (6), **characterised in that** said seat (10) and said pin (6) comprise the means and counter-means (11A, 11 B) to removably prevent dislocation, and further rotation, of the second portion (8) of the pin (6) away from said second position (R), said seat (10) being formed by reducing the lower part (4B), and in particular the thickness (S1), of one of the connection ends (4A) closest to the module lateral walls (17).

10. A conveyor as claimed in claim 1, **characterised in that** the first portion (7) of the pin (6) comprises at one of its ends (7A) a cylindrical head coaxial to said first portion (7) and having a larger diameter than said first portion (7) and than said apertures (5), the second pin portion (8) extending from said head (7B), the pin (6) and the module body being dimensioned such that when the pin connects two modules together, the pin head abuts against the outer wall of a first connection end (4A) and the projecting pin portion (8) is coplanar with the seat (10) and, by rotating the pin, can be rotated into and out of said seat without further adjusting the pin position.

11. A conveyor as claimed in claim 9, **characterised in that** the means and counter-means (11A, 11 B) to removably prevent dislocation of the second portion (8) of the pin (6) from said second position (R) comprise: a through hole (18) provided in the lateral wall (17A) close to the seat (10), said hole (18) connecting said seat to an external surface of said wall (17A), and a projecting element (19) provided on the second pin portion (8) to snap-connect into said through hole (18)
